# EUROPEAN PATENT APPLICATION

(11) **EP 4 811 814 A1**
(43) Date of publication of application: **23.09.2026**
(21) Application number: 25818780.6
(22) Date of filing: 11.03.2025
(51) Int. Cl.: H04Q 11/00

(54) **ABNORMALITY DETECTION METHOD AND APPARATUS FOR OPTICAL ACCESS DEVICES, AND DEVICE AND STORAGE MEDIUM**

(30) Priority: 04.06.2024 CN 202410718418
(71) Applicant: Ruijie Networks Co., Ltd., Fuzhou, Fujian 350002 (CN)
(72) Inventor: ZHANG, Xiaofeng, Fuzhou, Fujian 350002 (CN); WANG, Longshun, Fuzhou, Fujian 350002 (CN); CHEN, Jiawei, Fuzhou, Fujian 350002 (CN); ZHANG, Mingzhen, Fuzhou, Fujian 350002 (CN); LIAO, Jiabin, Fuzhou, Fujian 350002 (CN)
(74) Representative: Mathys & Squire
(86) International application number: PCT/CN2025/081914
(87) International publication number: WO 2025/251717

(57) **Abstract**

This application provides a method, an apparatus, and a device for abnormality detection of an optical access device, and a storage medium. The method includes: obtaining an offline situation of an optical access device within a preset time period; indicating, in response to the offline situation satisfying a preset detection condition, one or more in-service first optical access devices in the optical access device to suspend a registration process within K time windows, where K is a positive integer greater than or equal to 2, the K time windows one-to-one correspond to K discovery windows, and the K discovery windows are adjacent and used for performing the registration process; collecting optical signal strength within the K time windows respectively to obtain K signal strength values, where the K time windows one-to-one correspond to the K signal strength values; and determining, based on the K signal strength values, whether an abnormal optical access device exists in the optical access device.

## Description

### CROSS-REFERENCE TO RELATED APPLICATIONS

This application claims priority to Chinese Patent Application No. 202410718418.X, filed with the China National Intellectual Property Administration on June 4, 2024 and entitled "METHOD, APPARATUS, AND DEVICE FOR ABNORMALITY DETECTION OF OPTICAL ACCESS DEVICE, AND STORAGE MEDIUM", which is incorporated herein by reference in its entirety.

### TECHNICAL FIELD

This application relates to the field of communication technologies, and in particular, to a method, an apparatus, and a device for abnormality detection of an optical access device, and a storage medium.

### BACKGROUND

Ethernet is a computer local area network technology, and a network architecture mainly includes a network device at a core layer, a network device at a convergence layer, and a network device at an access layer. Traditional Ethernet network devices at the layers can communicate with each other in a wired or wireless manner.

On the background of fiber replacing copper, an optical access network has developed rapidly. A passive optical network (PON) is a communication network architecture that adopts an optical fiber transmission technology, which utilizes an optical fiber as a transmission medium, can provide a high-rate and high-bandwidth transmission capability, and has been widely used in fields such as broadband access, campus networks, and urban broadband coverage.

The PON architecture includes an optical line terminal (OLT), an optical distribution network (ODN), and an optical network unit (ONU). The OLT is a core device of the PON, and is responsible for sending and receiving an optical signal, converting data into an optical signal, and transmitting the optical signal to the user side via an optical fiber. The ODN is an optical distribution network, and is responsible for transmitting an optical signal from the OLT to a user side. The ONU is customer premises equipment, is installed in a place such as user home, office, or campus, and receives an optical signal and converts the optical signal into an electrical signal to provide a network connection to user equipment such as a computer, a telephone, and a router.

A manner in which Ethernet achieves optical splitting includes optical splitting implemented based on a PON chip (abbreviated as PON optical splitting) and optical splitting implemented based on an Ethernet device (abbreviated as Ethernet optical splitting).

In the PON optical splitting manner, the network device at the core layer may be a core network device and an OLT having a PON chip, or may be a core network device integrated with a PON chip. The network device at the convergence layer may include a passive optical splitter. The network device at the access layer may be an access network device and an ONU having a PON chip, or may be an access network device integrated with a PON chip (abbreviated as ONU).

In the Ethernet optical splitting manner, the network device at the core layer may be a core network device having an optical network convergence function (this optical network convergence function does not need to rely on a PON chip for implementation). The network device at the convergence layer may include a passive optical splitter. The network device at the access layer may be an access network device having an optical network convergence function (this optical network convergence function does not need to rely on a PON chip for implementation).

### SUMMARY

Embodiments of this application provide a method, an apparatus, and a device for abnormality detection of an optical access device, and a storage medium.

According to a first aspect, an embodiment of this application provides a method for abnormality detection of an optical access device. The method includes:
obtaining an offline situation of the optical access device within a preset time period;
indicating, in response to the offline situation satisfying a preset detection condition, one or more in-service first optical access devices in the optical access device to suspend a registration process within K time windows, where K is a positive integer greater than or equal to 2, the K time windows one-to-one correspond to K discovery windows, and the K discovery windows are adjacent and used for performing the registration process;
collecting optical signal strength within the K time windows respectively to obtain K signal strength values, where the K time windows one-to-one correspond to the K signal strength values; and
determining, based on the K signal strength values, whether an abnormal optical access device exists in the optical access device.

In an embodiment, the determining, based on the K signal strength values, whether the abnormal optical access device exists in the optical access device includes:
when at least two signal strength values in the K signal strength values are all greater than a preset strength value and time windows corresponding to the at least two signal strength values respectively include at least two adjacent time windows, determining that the abnormal optical access device exists in the optical access device.

In an embodiment, the obtaining the offline situation of the optical access device within the preset time period includes:
obtaining a first state of the optical access device at a first moment and a second state of the optical access device at a second moment, where the first moment is earlier than the second moment, and the first state of the optical access device and the second state of the optical access device are adjacent states;
determining the preset time period based on the first moment and the second moment; and
determining the offline situation of the optical access device within the preset time period based on the first state of the optical access device and the second state of the optical access device.

In an embodiment, the determining the offline situation of the optical access device within the preset time period based on the first state of the optical access device and the second state of the optical access device includes:
determining, based on the first state of the optical access device and the second state of the optical access device, a quantity of one or more second optical access devices in the optical access device, where a first state or first states of the one or more second optical access devices is an in-service state, and a second state or second states of the one or more second optical access devices is an out-of-service state.

In an embodiment, the offline situation satisfying the preset detection condition includes the quantity of the one or more second optical access devices being greater than a preset value.

In an embodiment, each of the K time windows is included in a corresponding discovery window.

In an embodiment, a start position of a first time window in the K time windows is later than or equal to a start position of a first discovery window in the K discovery windows, an end position of the first time window is earlier than or equal to an end position of the first discovery window, and the first discovery window is a discovery window corresponding to the first time window.

In an embodiment, the first information includes indication information and a first identifier, the indication information indicates the K time windows, and the first identifier indicates the one or more first optical access devices to suspend the registration process within the time windows.

In an embodiment, the collecting the optical signal strength within the K time windows respectively includes:
collecting a first signal strength value within a second time window in the K time windows; and
when the first signal strength value is greater than a preset strength value, collecting a second signal strength value within a third time window in the K time windows, where the third time window is a next time window of the second time window; and
the determining, based on the K signal strength values, that the abnormal optical access device exists in the optical access device includes:
   when the first signal strength value and the second signal strength value are both greater than the preset strength value, determining that the abnormal optical access device exists in the optical access device.

In an embodiment, the collecting the optical signal strength within the K time windows respectively to obtain the K signal strength values includes:
performing a plurality of collections for signal strength values within a fourth time window in the K time windows, and obtaining a third signal strength value for the fourth time window based on the signal strength values obtained through the plurality of collections.

In an embodiment, the indicating, in response to the offline situation satisfying the preset detection condition, the one or more in-service first optical access devices in the optical access device to suspend the registration process within the K time windows includes:
broadcasting a first message in response to the offline situation satisfying the preset detection condition, where the first message indicates the one or more in-service first optical access devices in the optical access device to suspend the registration process within the K time windows; and/or
after it is determined that the abnormal optical access device exists in the optical access device, the method further includes:
   broadcasting second information, where the second information indicates the one or more first optical access devices to resume the registration process within the time windows.

In an embodiment, the determining, based on the K signal strength values, whether the abnormal optical access device exists in the optical access device includes:
in response to the K signal strength values satisfying a first condition, determining that the abnormal optical access device does not exist in the optical access device, where the first condition indicates that the following situation does not exist: Two adjacent signal strength values in the K signal strength values are both greater than a preset strength value; and the two adjacent signal strength values are signal strength values corresponding to two adjacent time windows in the K time windows.

In an embodiment, after the determining, based on the K signal strength values, whether the abnormal optical access device exists in the optical access device, the method further includes:
broadcasting third information after determining that the abnormal optical access device does not exist in the optical access device, where the third information indicates the one or more first optical access devices to resume the registration process within the time windows.

An embodiment of this application provides a method for abnormality detection of an optical access device, including:
obtaining an offline situation of the optical access device within a preset time period;
broadcasting fourth information in response to the offline situation satisfying a preset detection condition, where the fourth information indicates one or more in-service first optical access devices in the optical access device to suspend a registration process within a plurality of discovery windows used for registration;
collecting optical signal strength within the plurality of discovery windows respectively to obtain a plurality of signal strength values;
determining, based on the plurality of signal strength values, whether an abnormal optical access device exists in the optical access device; and
when N consecutive signal strength values in the plurality of signal strength values are all greater than a preset strength value, determining that the abnormal optical access device exists in the optical access device, where N is a positive integer greater than or equal to 2.

In an embodiment, the collecting the optical signal strength within the plurality of discovery windows respectively to obtain the plurality of signal strength values includes:
collecting optical signal strength within a first discovery window in the plurality of discovery windows to obtain a first signal strength value;
collecting optical signal strength within a second discovery window in the plurality of discovery windows when the first signal strength value is greater than the preset strength value, to obtain a second signal strength value, where the second discovery window is a next discovery window of the first discovery window; and
when the second signal strength value is greater than the preset strength value, determining that the abnormal optical access device exists in the optical access device.

In an embodiment, after the obtaining the first signal strength value, the method further includes:
broadcasting fifth information when the first signal strength value is less than or equal to the preset strength value, where the fifth information indicates the one or more first optical access devices to resume the registration process within a discovery window used for registration; or
broadcasting fifth information when the first signal strength value and the second signal strength value are both less than or equal to the preset strength value, where the fifth information indicates the one or more first optical access devices to resume the registration process within a discovery window used for registration.

According to a second aspect, an embodiment of this application provides an apparatus for abnormality detection of an optical access device, including:
a transceiver unit, configured to obtain an offline situation of the optical access device within a preset time period;
a registration suspension unit, further configured to indicate, in response to the offline situation satisfying a preset detection condition, an in-service first optical access device in the optical access device to suspend a registration process within K time windows, where K is a positive integer greater than or equal to 2, the K time windows one-to-one correspond to K discovery windows, and the K discovery windows are adjacent and used for performing the registration process;
a collection unit, configured to collect optical signal strength within the K time windows respectively to obtain K signal strength values, where the K time windows one-to-one correspond to the K signal strength values; and
a determining unit, configured to determine, based on the K signal strength values, whether an abnormal optical access device exists in the optical access device.

An embodiment of this application provides an apparatus for abnormality detection of an optical access device, including:
a transceiver unit, configured to obtain an offline situation of the optical access device within a preset time period;
a registration suspension unit, configured to broadcast fourth information in response to the offline situation satisfying a preset detection condition, where the fourth information indicates one or more in-service first optical access devices in the optical access device to suspend a registration process within a plurality of discovery windows used for registration;
a collection unit, configured to collect optical signal strength within the plurality of discovery windows respectively to obtain a plurality of signal strength values; and
a determining unit, configured to: determine, based on the plurality of signal strength values, whether an abnormal optical access device exists in the optical access device; and when N consecutive signal strength values in the plurality of signal strength values are all greater than a preset strength value, determine that the abnormal optical access device exists in the optical access device, where N is a positive integer greater than or equal to 2.

An embodiment of this application provides a method for abnormality detection of an optical access device, the method includes:
obtaining an offline situation of an optical access device within a preset time period;
broadcasting first information when the offline situation satisfies a preset detection condition, where the first information indicates the optical access device to suspend a registration process within K time windows; K is greater than or equal to 2; and the K time windows one-to-one correspond to K adjacent discovery windows used for registration;
collecting optical signal strength within the K time windows respectively to obtain K signal strength values, where the K time windows one-to-one correspond to the K signal strength values; and
when M signal strength values in the K signal strength values are all greater than a preset strength value and adjacent time windows exist in time windows corresponding to the M signal strength values respectively, determining that an abnormal optical access device exists in a PON, where M is less than or equal to K and greater than or equal to 2.

According to the method for abnormality detection of an optical access device provided in this embodiment of this application, when the offline situation of the optical access device within the preset time period satisfies the preset detection condition, a first message is broadcast, where the first message indicates the optical access device to suspend the registration process within the K time windows; the optical signal strength is collected within the K time windows respectively; and when the M signal strength values in the K signal strength values are all greater than the preset strength value and the adjacent time windows exist in the time windows corresponding to the M signal strength values, it may be considered that the abnormal optical access device exists in the PON. Because M is greater than or equal to 2, that is, only when at least two collection results of optical signal strength are greater than the preset strength value, it is determined that the abnormal optical access device exists in the PON. This avoids a situation in which a determining error occurs due to an error of a single detection, and can improve accuracy of abnormality detection of an optical access device. Compared with relying on experience of technical persons to determine when to perform abnormality detection of an optical access device, in this application, the state of the optical access device is monitored and analyzed, and abnormality detection of an optical access device is automatically started when a quantity of ONUs in an out-of-service state exceeds a preset value, without manual intervention. This can further improve accuracy of abnormality detection of an optical access device.

In addition, the discovery window used for registration may also be referred to as discover gate. In this application, the K time windows one-to-one correspond to K adjacent discovery windows used for registration, that is, the discovery windows used for registration are reused in this application to collect optical strength, without additionally allocating a time window for collecting optical strength. This reduces impact of abnormality detection of an optical access device on bandwidth utilization.

In an embodiment, the obtaining the offline situation of the optical access device within a preset time period includes:
obtaining states of a plurality of optical access devices at a first moment, and states of the plurality of optical access devices at a second moment, where the first moment is earlier than the second moment and the states of the plurality of optical access devices at the first moment and the states of the plurality of optical access devices at the second moment are adjacent states; and the preset time period is determined based on the first moment and the second moment; and
determining, based on the states of the plurality of optical access devices at the first moment and the states of the plurality of optical access devices at the second moment, that N optical access devices in the plurality of optical access devices are in an in-service state at the first moment and in an out-of-service state at the second moment, where N is a positive integer.

Because a state change within a long period of time has no reference significance for whether to trigger abnormality detection of an optical device, the offline situation of the optical access devices within the preset time period is determined in this application based on a state change of the optical access devices from the first moment to the second moment, and the states of the optical access devices at the first moment and the states of the plurality of optical access devices at the second moment are adjacent states, that is, this application restricts the state change of the optical access devices in a time dimension. This can trigger abnormality detection of an optical access device more reasonably. In other words, adjacent states are two or more states consecutive in a time dimension.

In an embodiment, the offline situation satisfying the preset detection condition includes a value of N being greater than a preset value.

In an embodiment, the preset value is greater than or equal to 2.

Becoming online and offline of an optical access device is a random discrete process. Under normal circumstances, the following situation may not occur: More than two optical access devices become offline simultaneously within a short period of time. A preset value is set to be greater than or equal to 2, and detection for an abnormal optical access device is performed only when a quantity of optical access devices changing from an in-service state to an out-of-service state is greater than the preset value, effectively saving resources.

In an embodiment, a start position of an i^{th} time window is later than or equal to a start position of an i^{th} discovery window, and an end position of the i^{th} time window is earlier than or equal to an end position of the i^{th} discovery window. The i^{th} time window is any one of the K time windows, and i is a positive integer. The i^{th} discovery window is a discovery window corresponding to the i^{th} time window.

The discovery window may be completely reused as the time window, or the time window may be freely configured based on the discovery window, with flexible application.

In an embodiment, the first information includes indication information and a first identifier, the indication information indicates the K time windows, and the first identifier indicates the optical access device to suspend the registration process within the discovery window.

In an embodiment, second information is broadcast after determining that the abnormal optical access device exists in the PON, where the second information indicates the optical access device to resume the registration process within the discovery window.

After it is determined that the abnormal optical access device exists, the second information is broadcast in a timely manner, for resuming the registration process of the optical access device in the PON. This avoids long-term impact on a registration function of an optical access device due to abnormality detection of an optical access device.

In an embodiment, after it is determined that the abnormal optical access device exists in the PON, that the abnormal optical access device exists in the PON is indicated to a user.

After it is determined that the abnormal optical access device exists, an indication is provided to the user, so that relevant technical persons may quickly carry out a check based on the indication and locate the abnormal optical access device in the PON, improving security of the PON.

In an embodiment, when the K signal strength values satisfy a first condition, it is determined that the abnormal optical access device does not exist in the PON. The first condition indicates that the following situation does not exist: Any two adjacent signal strength values in the K signal strength values are both greater than a preset strength value. Any two adjacent signal strength values are signal strength values corresponding to any two adjacent time windows in the K time windows.

In an embodiment, third information is broadcast after it is determined that the abnormal optical access device does not exist in the PON, where the third information indicates the optical access device to resume the registration process within the discovery window.

An embodiment of this application further provides a method for abnormality detection of an optical access device, the method includes:
obtaining an offline situation of an optical access device within a preset time period;
broadcasting fourth information when the offline situation satisfies a preset detection condition, where the fourth information indicates the optical access device to suspend a registration process within a discovery window used for registration; and
collecting optical signal strength within each discovery window; and when N consecutive optical signal strength values are greater than a preset strength value, determining that an abnormal optical access device exists in a PON, where N is a positive integer and N is greater than or equal to 2.

When the offline situation of the optical access device satisfies a preset detection condition, the optical access device may be indicated to suspend the registration process within the discovery window used for registration, and a quantity of required windows is determined based on an actual detection situation, simplifying a process of abnormality detection of an optical access device.

In an embodiment, the collecting optical signal strength within each discovery window, and when the N consecutive optical signal strength values are greater than the preset strength value, determining that the abnormal optical access device exists in the PON includes:
collecting optical signal strength within a first discovery window to obtain a first signal strength value, where the first discovery window is the discovery window that is the first one after a broadcast moment of the fourth information;
collecting optical signal strength within a second discovery window when the first signal strength value is greater than a preset strength value, to obtain a second signal strength value, where the second discovery window is a next discovery window of the first discovery window; and
when the second signal strength value is greater than the preset strength value, determining that the abnormal optical access device exists in the PON.

Compared with determining that the abnormal optical access device exists in the PON only when the first signal strength value is greater than the preset strength value, in this application, comprehensive determining is performed based on the first signal strength value and the second signal strength value, and when the first signal strength value and the second strength value are both greater than the preset strength value, it is determined that the abnormal optical access device exists in the PON. This improves accuracy and reliability of detection for an abnormal optical access device.

In an embodiment, after the obtaining the first signal strength value, the method further includes:
broadcasting fifth information when the first signal strength value is less than or equal to the preset strength value, where the fifth information indicates the optical access device to resume the registration process within the discovery window; or
collecting optical signal strength within the second discovery window when the first signal strength value is less than or equal to the preset strength value, to obtain a second signal strength value, where the second discovery window is a next discovery window of the first discovery window; and
broadcasting the fifth information when the first signal strength value and the second signal strength value are both less than or equal to the preset strength value.

The fifth information is broadcast in a timely manner after a detection result is determined based on the first signal strength value and the second signal strength value. This avoids long-term impact on a registration function of an optical access device due to abnormality detection of an optical access device.

In an embodiment, after the obtaining the second signal strength value, the method further includes:
broadcasting sixth information when the second signal strength value is less than or equal to the preset strength value, where the sixth information indicates the optical access device to resume the registration process within the discovery window.

The sixth information is broadcast in a timely manner after a detection result is determined. This avoids long-term impact on a registration function of an optical access device due to abnormality detection of an optical access device.

In an embodiment, the method further includes:
broadcasting seventh information when L consecutive optical signal strength values are less than or equal to the preset strength value, where the seventh information indicates the optical access device to resume the registration process within the discovery window, and L is a positive integer and L is greater than or equal to 2.

When the L consecutive optical signal strength values are less than or equal to the preset strength value, the seventh information is broadcast, resuming the optical access device to resume the registration process within a discovery window used for registration. This avoids impact on a detection result due to an error of a single collection, and improves accuracy and reliability of detection for an abnormal optical access device.

In an embodiment, after the determining that the abnormal optical access device exists in the PON, the method further includes:
broadcasting eighth information, where the eighth information indicates the optical access device to resume the registration process within the discovery window.

The eighth information is broadcast in a timely manner after it is determined that the abnormal optical access device exists in the PON. This avoids long-term impact on a registration function of an optical access device due to abnormality detection of an optical access device.

An embodiment of this application provides an apparatus for abnormality detection of an optical access device. The apparatus includes a transceiver unit and a processing unit.

The transceiver unit is configured to obtain an offline situation of an optical access device within a preset time period.

The transceiver unit is further configured to broadcast first information when the offline situation satisfies a preset detection condition, where the first information indicates the optical access device to suspend a registration process within K time windows; K is greater than or equal to 2; and the K time windows one-to-one correspond to K adjacent discovery windows used for registration.

The processing unit is configured to: collect optical signal strength within the K time windows respectively to obtain K signal strength values, where the K time windows one-to-one correspond to the K signal strength values; and when M signal strength values in the K signal strength values are all greater than a preset strength value and adjacent time windows exist in time windows corresponding to the M signal strength values respectively, determine that an abnormal optical access device exists in the PON, where M is less than or equal to K and greater than or equal to 2.

In an embodiment, when the transceiver unit is configured to: when obtaining the offline situation of the optical access device within the preset time period, obtain states of the plurality of optical access devices at a first moment and states of the plurality of optical access devices at a second moment, where the first moment is earlier than the second moment, the states of the plurality of optical access devices at the first moment and the states of the plurality of optical access devices at the second moment are adjacent states, and the preset time period is determined based on the first moment and the second moment; and determine, based on the states of the plurality of optical access devices at the first moment and the states of the plurality of optical access devices at the second moment, that N optical access devices in the plurality of optical access devices are in an in-service state at the first moment and in an out-of-service state at the second moment, where N is a positive integer.

In an embodiment, the offline situation satisfying the preset detection condition includes a value of N being greater than a preset value.

In an embodiment, the preset value is greater than or equal to 2.

In an embodiment, a start position of an i^{th} time window is later than or equal to a start position of an i^{th} discovery window, and an end position of the i^{th} time window is earlier than or equal to an end position of the i^{th} discovery window. The i^{th} time window is any one of the K time windows, and i is a positive integer. The i^{th} discovery window is a discovery window corresponding to the i^{th} time window.

In an embodiment, the first information includes indication information and a first identifier, the indication information indicates the K time windows, and the first identifier indicates the optical access device to suspend the registration process within the discovery window.

In an embodiment, the transceiver unit is configured to broadcast second information after determining that the abnormal optical access device exists in the PON, where the second information indicates the optical access device to resume the registration process within the discovery window.

In an embodiment, the processing unit is configured to: after determining that the abnormal optical access device exists in the PON, indicate to a user that the abnormal optical access device exists in the PON.

In an embodiment, when the K signal strength values satisfy a first condition, it is determined that the abnormal optical access device does not exist in the PON. The first condition indicates that the following situation does not exist: Any two adjacent signal strength values in the K signal strength values are both greater than a preset strength value. Any two adjacent signal strength values are signal strength values corresponding to any two adjacent time windows in the K time windows.

In an embodiment, the transceiver unit is configured to broadcast third information after determining that the abnormal optical access device does not exist in the PON, where the third information indicates the optical access device to resume the registration process within the discovery window.

An embodiment of this application provides an apparatus for abnormality detection of an optical access device. The apparatus includes a transceiver unit and a processing unit.

The transceiver unit is configured to obtain an offline situation of an optical access device within a preset time period.

The transceiver unit is further configured to broadcast fourth information when the offline situation satisfies a preset detection condition, where the fourth information indicates the optical access device to suspend a registration process within a discovery window used for registration.

The processing unit is configured to: collect optical signal strength within each discovery window; and when N consecutive optical signal strength values are greater than a preset strength value, determine that an abnormal optical access device exists in a PON, where N is a positive integer and N is greater than or equal to 2.

In an embodiment, the processing unit is configured to: collect optical signal strength within each discovery window; and when determining, in the case of the N consecutive optical signal strength values being greater than the preset strength value, that the abnormal optical access device exists in the PON, collect optical signal strength within a first discovery window to obtain a first signal strength value, where the first discovery window is the discovery window that is the first one after a broadcast moment of the fourth information; collect optical signal strength within a second discovery window when the first signal strength value is greater than the preset strength value, to obtain a second signal strength value, where the second discovery window is a next discovery window of the first discovery window; and when the second signal strength value is greater than the preset strength value, determine that the abnormal optical access device exists in the PON.

In an embodiment, after the obtaining the first signal strength value, the transceiver unit is further configured to: broadcast fifth information when the first signal strength value is less than or equal to the preset strength value, where the fifth information indicates the optical access device to resume the registration process within a discovery window used for registration; or collect optical signal strength within the second discovery window when the first signal strength value is less than or equal to the preset strength value, to obtain a second signal strength value, where the second discovery window is a next discovery window of the first discovery window; and broadcast the fifth information when the first signal strength value and the second signal strength value are both less than or equal to the preset strength value.

In an embodiment, after the obtaining the second signal strength value, the transceiver unit is further configured to broadcast sixth information when the second signal strength value is less than or equal to the preset strength value, where the sixth information indicates the optical access device to resume the registration process within the discovery window.

In an embodiment, the transceiver unit is further configured to broadcast seventh information when L consecutive optical signal strength values are less than or equal to the preset strength value, where the seventh information indicates the optical access device to resume the registration process within the discovery window, and L is a positive integer and L is greater than or equal to 2.

In an embodiment, after determining that the abnormal optical access device exists in the PON, the transceiver unit is further configured to broadcast eighth information, where the eighth information indicates the optical access device to resume the registration process within the discovery window.

According to a third aspect, an embodiment of this application further provides a device for abnormality detection of an optical access device, including one or more processors and one or more memories, where the one or more memories store one or more programs, and when the programs are executed by the one or more processors, the device is caused to perform the method as described in any of the foregoing embodiments.

According to a fourth aspect, an embodiment of this application further provides a computer-readable storage medium, where the readable storage medium includes a program, and when the program is executed on an apparatus, the apparatus is caused to perform the method as described in any of the foregoing embodiments.

According to a fifth aspect, an embodiment of this application further provides a computer program product, where the computer program product includes a computer program, and when the computer program is executed by a processor, the method as described in any of the foregoing embodiments is implemented.

### BRIEF DESCRIPTION OF DRAWINGS

To more clearly illustrate the technical solutions in embodiments of this application, the accompanying drawings to be used in the description of embodiments are briefly introduced below. It is clear that the accompanying drawings in the following description are only some embodiments of this application. For persons of ordinary skill in the art, other accompanying drawings can also be obtained based on these accompanying drawings without creative efforts.
FIG. 1 is a schematic diagram of a PON architecture according to an embodiment of this application;
FIG. 2 is a schematic flowchart of a method for abnormality detection of an optical access device according to an embodiment of this application;
FIG. 3 is a schematic flowchart of a method for abnormality detection of an optical access device according to an embodiment of this application;
FIG. 4 is a schematic diagram of a structure of an apparatus for abnormality detection of an optical access device according to the embodiment of FIG. 3;
FIG. 5 is a schematic flowchart of a method for abnormality detection of an optical access device according to an embodiment of this application;
FIG. 6 is a schematic diagram of a structure of an apparatus for abnormality detection of an optical access device according to the embodiment of FIG. 5 of this application; and
FIG. 7 is a schematic diagram of a structure of a device for abnormality detection of an optical access device according to an embodiment of this application.

### DESCRIPTION OF EMBODIMENTS

To make the objectives, technical solutions, and advantages of this application clearer, this application is further described in detail below with reference to the accompanying drawings. It is clear that the described embodiments are only some embodiments of this application, rather than all embodiments. Based on embodiments in this application, all other embodiments obtained by persons of ordinary skill in the art without creative efforts belong to the scope of protection of this application.

Application scenarios described in embodiments of this application are for more clearly illustrating the technical solutions of embodiments of this application, and do not constitute a limitation on the technical solutions provided by embodiments of this application. Persons of ordinary skill in the art may know that with the emergence of new application scenarios, the technical solutions provided by embodiments of this application are also applicable to similar technical problems. In the descriptions of this application, unless otherwise specified, the meaning of "a plurality of" is two or more.

In the present disclosure, expressions such as "A or B", "at least one of A and/or B", and "one or more of A and/or B" may include all possible combinations of the items listed together. For example, "A or B", "at least one of A and B", or "at least one of A or B" may represent all of the following: (1) including at least one A, (2) including at least one B, or (3) including both at least one A and at least one B.

Expressions such as "first" and "second" used in this application are only used to distinguish one component from another component, and do not limit the order and/or importance of the components. For example, first user equipment and second user equipment may indicate different user equipment, regardless of their order or importance. For example, without departing from the scope of this application, a first component may be named a second component, and similarly, a second component may also be named a first component.

Terms such as "module", "unit", and "component" used in this application are components that perform at least one function or operation, and such components may be implemented by hardware or software, or by a combination of hardware and software. In addition, a plurality of "modules", a plurality of "units", a plurality of "components", and the like may be integrated into at least one module or chip, and may be implemented in at least one processor, except in a situation in which they need to be implemented respectively in separate specific hardware.

Unless otherwise defined in the context, for convenience of expression in the example embodiments of this specification, in an Ethernet optical splitting manner, a network device at an access layer is abbreviated as an ONU, and a network device at a core layer is abbreviated as an OLT.

Unless otherwise defined in the context, terms "adjacent discovery windows" or "adjacent time windows" in the example embodiments of this specification are two discovery windows that are adjacent in a time dimension or two time windows that are adjacent in a time dimension.

As described above, in an Ethernet optical splitting network, the OLT broadcasts scheduling of each ONU (the scheduling is used to inform the ONU of a timeslot for sending upstream data) to the ONU, and the ONU emits light based on the scheduling in its own timeslot. When an ONU does not emit light based on the scheduling issued by the OLT, or emits light for a long period of time or irregularly, such ONU is referred to as an abnormal ONU or a rogue ONU. Such ONU may cause another ONU to be unable to become online for a long period of time, to switch between online and offline repeatedly, to encounter a packet loss, or the like, affecting normal communication of the network.

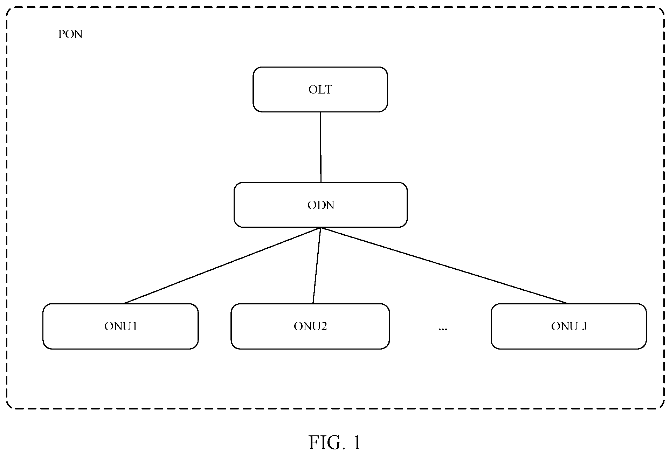

FIG. 1 shows an architectural relationship between an OLT, an ODN, and a plurality of ONUs that constitute a PON. From top to bottom are the OLT, ODN, and the plurality of ONUs. The OLT is a core device of the PON, and is responsible for receiving an optical signal and transmitting the optical signal to the ODN. The ODN is an optical distribution network, and is responsible for distributing the optical signal to each ONU. The ONU is customer premises equipment and is also the above-mentioned optical access device, and the ONU is responsible for converting the received optical signal into an electrical signal to provide a network connection for user equipment such as a computer, a telephone, or a router.

The PON adopts an optical fiber sharing technology to achieve data transmission between a plurality of users through one optical fiber, that is, a point-to-multipoint transmission technology. For downstream data, a passive optical splitter performs physical optical splitting and transmits split light to an accessed terminal. For example, the OLT in FIG. 1 can transmit the optical signal to the plurality of ONUs via the ODN. For upstream data, a time division multiple access (TDMA) technology is used to separate signals of different terminals through time slicing, to share upstream link bandwidth. For example, the plurality of ONUs in FIG. 1 can transmit data to the OLT via the ODN within mutually independent time windows.

A TDMA technology has advantages such as a strong anti-interference capability, high flexibility, and simple implementation, is applicable to various wireless communication systems, and is a multiple access technology for communication on a shared medium. TDMA divides communication time into fixed-length time periods, and each time period is allocated to one user (that is, ONU). Time period allocation between a plurality of users is performed according to a specified rule to ensure that communication between the users does not conflict. The users can independently transmit data within their respective time periods, achieving simultaneous communication between the plurality of users, thereby improving a capacity and efficiency of a wireless communication system.

As described in the background, an abnormal ONU in the PON may cause a packet loss. Therefore, detection for an abnormal ONU is very important.

In traditional technologies, in terms of detection for an abnormal ONU, a time window in which the ONU does not transmit data is usually selected for collecting optical strength. There are the following two manners of selecting a time window in which the ONU does not transmit data:

### Manner 1: Set a reserved gap.

The reserved gap is a time spacing for separating data transmission of different ONUs. For example, there are two ONUs in a PON, namely ONU1 and ONU2. A time window allocated for ONU1 to send data is from the 1^{st} second to the 2^{nd} second (that is, the 1^{st} second and the 2^{nd} second), and a time window allocated for ONU2 to send data is from the 4^{th} second to the 5^{th} second (that is, the 4^{th} second and the 5^{th} second). In this case, the 2^{nd} second to the 3^{rd} second or the 3^{rd} second to the 4^{th} second or the 2^{nd} second to the 4^{th} second may be selected as a reserved gap, and optical signal strength is collected during the reserved gap.

### Manner 2: Reserve a detection gap.

The reserved detection gap is a special gap separately reserved for detection for an abnormal ONU after an ONU completes data transmission. For example, for the example in the above manner 1, a moment at which ONU completes data transmission is the 5^{th} second; in this case, a time period such as the 5^{th} second to the 6^{th} second or the 6^{th} second to the 7^{th} second in which the ONU completes data transmission may be selected as a detection gap, and optical signal strength is collected during the detection gap.

Both of the above two methods have specific disadvantages. For manner 1, as a quantity of ONUs in the PON increases day by day, bandwidth utilization also increases accordingly, causing a shortened reserved gap. This cannot meet a time requirement for collecting optical strength, affecting accuracy of a result of collecting optical strength, and thus affecting accuracy of detection for an abnormal ONU. For manner 2, a detection gap is always additionally reserved for detection for an abnormal ONU, and this is equivalent to reducing a time period for an ONU to perform data transmission, reducing bandwidth utilization.

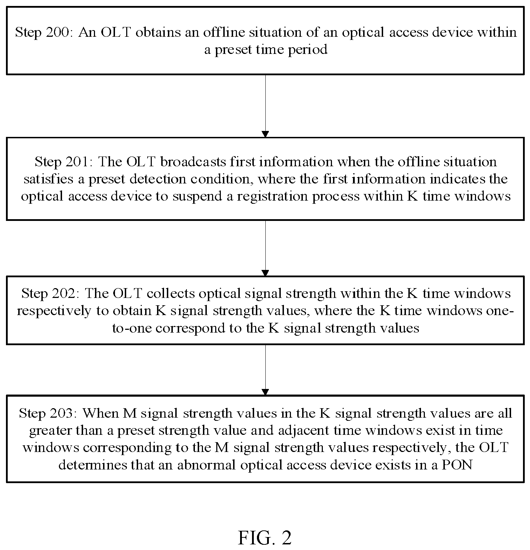

The embodiment shown in FIG. 2 of this application provides a method for abnormality detection of an optical access device, that is, a method for abnormality detection of an ONU, and the method may be performed by an OLT having a PON chip or an OLT integrated with a PON chip (abbreviated below as an OLT). This is not limited in this application.

The method for abnormality detection of an optical access device provided in this embodiment of this application includes the following steps.

Step 200: The OLT obtains an offline situation of an optical access device within a preset time period.

For example, obtaining an offline situation of a plurality of optical access devices (that is, ONUs) within the preset time period includes: obtaining states of the plurality of optical access devices at a first moment and states of the plurality of optical access devices at a second moment, where the first moment is earlier than the second moment and the states of the plurality of optical access devices at the first moment and the states of the plurality of optical access devices at the second moment are adjacent states; and determining, based on the states of the plurality of optical access devices at the first moment and the states of the plurality of optical access devices at the second moment, that N optical access devices in the one or more optical access devices are in an in-service state at the first moment and in an out-of-service state at the second moment, where N is a positive integer. The preset time period is determined based on the first moment and the second moment. For example, the preset time period may be the same as duration between the first moment and the second moment.

The OLT can obtain a state of the optical access device by using a packet in a keep-alive mechanism such as a keep-alive packet or a heartbeat packet. For example, the optical access device in the PON periodically sends keep-alive messages to the OLT. A state of an optical access device that sends a keep-alive message is an in-service state, and a state of an optical access device that does not send a keep-alive message is an out-of-service state.

For example, 10 optical access devices are accessed in the PON, the OLT in the PON receives keep-alive messages from the 10 optical access devices at the first moment, and receives keep-alive messages from six optical access devices at the second moment. That is, the 10 optical access devices are in an in-service state at the first moment, and the six optical access devices are in an in-service state at the second moment, where four optical access devices are in an in-service state at the first moment and in an out-of-service state at the second moment, that is, an offline situation of the optical access device within the preset time period is that the four optical access devices has been offline within the preset time period. N is 4.

Step 201: The OLT broadcasts first information when the offline situation satisfies a preset detection condition, where the first information indicates the optical access device to suspend a registration process within K time windows, where K is greater than or equal to 2.

For example, the offline situation satisfying the preset detection condition may be a value of N being greater than a preset value, where the preset value may be greater than or equal to 2. For example, the preset value is 2 or 3.

Under normal circumstances, generally, the following may not occur: More than two optical access devices become offline simultaneously within a short period of time, that is, change from an in-service state to an out-of-service state; however, when optical pollution is caused because an abnormal optical access device exists in the PON, more than two optical access devices may become offline simultaneously within a short period of time.

For example, when N is 1, which is less than the preset value 2, it indicates that the current offline situation does not satisfy the preset detection condition. When N is 4, which is greater than the preset value 2, it indicates that the current offline situation satisfies the preset detection condition.

For example, the OLT broadcasts the first information, and correspondingly, the optical access device in the PON receives the first information. The optical access device in the PON includes a registered optical access device and an unregistered optical access device, and the first information indicates an optical access device in the PON to suspend the registration process within the K time windows, that is, the first information indicates the unregistered optical access device to suspend registration within the K time windows. When the unregistered optical access device performs registration, the unregistered optical access device needs to send an optical signal, that is, a laser in the unregistered optical access device needs to emit light. Because the first information indicates the optical access device in the PON to suspend the registration process within the K time windows, none of unregistered optical access devices performs registration within the K time windows, and none of registered optical access devices emits light within the K time windows, that is, none of normal optical access devices emits light within the K time windows. However, when an abnormal optical access device exists, the abnormal optical access device may still perform registration within the K time windows, that is, an optical access device emitting light exists within the K time windows.

For example, the K time windows one-to-one correspond to K adjacent discovery windows used for registration. Taking an i^{th} time window as an example, the i^{th} time window is any one of the K time windows, and i is a positive integer. An i^{th} discovery window is a discovery window corresponding to the i^{th} time window. A start position of the i^{th} time window is later than or equal to a start position of the i^{th} discovery window, and an end position of the i^{th} time window is earlier than or equal to an end position of the i^{th} discovery window. That is, the i^{th} time window may have same duration as the i^{th} discovery window, or may be included in the i^{th} discovery window.

It can be understood that the discovery window is a time window used for an optical access device in the PON to perform registration.

For example, the first information includes indication information and a first identifier; the indication information indicates the K time windows, and the first identifier indicates the optical access device to suspend the registration process within the discovery window.

The OLT includes a multi-point control protocol (MPCP) module. The MPCP module preconfigures discovery windows used for registration. All of the discovery windows have same duration, and time spacings between every two adjacent discovery windows are the same.

For example, it is assumed that duration of discovery windows preconfigured by the OLT for registration is 2 minutes, and that a time spacing between any two adjacent discovery windows is 10 minutes. For example, a discovery window is discovery window ①: 10:00 to 10:02, and a next discovery window adjacent to the discovery window, that is, discovery window ②, is 10:12 to 10:14; a time window corresponding to discovery window ① may be 10:00 to 10:02, or a time window corresponding to discovery window ① may alternatively be included in 10:00 to 10:02, for example, the time window corresponding to the discovery window ① is 10:00 to 10:01.

For example, there may be a plurality of situations for the indication information included in the first information. For example, the indication information may be one of the following situations.

When the K time windows are completely the same as time periods of the K discovery windows used for registration, the indication information indicates that configuration of the K time windows is completely the same as configuration of the K discovery windows used for registration, that is, the K discovery windows used for registration are completely reused.

② When a start position of each time window in the K time windows is completely the same as a start position of a corresponding discovery window used for registration, the indication information may include an end position of each time window or an offset of an end position of each time window relative to an end position of the corresponding discovery window used for registration.

③ When the end position of each time window in the K time windows is completely the same as the end position of the corresponding discovery window used for registration, the indication information may include the start position of each time window or an offset of the start position of each time window relative to the start position of the corresponding discovery window used for registration.

④ When neither the start position nor the end position of each time window in the K time windows is the same as that of the corresponding discovery window used for registration, the indication information should include at least two of the start position, the end position, and duration of each time window in the K time windows.

In an embodiment, the first information indicates an optical access device in the PON to suspend the registration process within two time windows. When the indication information included in the first information is the above situation ③, the indication information may be: time window ①: start position: 10:01; time window ②: start position: 10:13; first identifier: unregistrable.

In this embodiment of this application, status information of the optical access device is actively monitored and analyzed, so that when the offline situation of the optical access device satisfies the preset detection condition, abnormality detection of an optical access device is automatically triggered without relying on manual experience, improving a degree of automation of abnormality detection of an optical access device.

Step 202: The OLT collects optical signal strength within the K time windows respectively to obtain K signal strength values, where the K time windows one-to-one correspond to the K signal strength values.

For example, the OLT further includes a received signal strength indicator (RSSI) module, and collects optical signal strength by using the RSSI module. In wireless communication, a collection result of the RSSI is usually used to measure strength of a signal received by a receiving end, the collection result is a negative number in dBm. A value of the collection result is positively correlated to the optical signal strength. A greater value of the collection result indicates higher optical signal strength. A smaller value of the collection result indicates lower optical signal strength. For example, optical signal strength indicated by -5 dBm is higher than optical signal strength indicated by -15 dBm.

For example, the first information indicates an optical access device in the PON to suspend the registration process within two time windows; the two time windows are time window ①: 10:01 to 10:02 and time window ②: 10:13 to 10:14; optical signal strength is collected within time window ① to obtain signal strength value ①, and optical signal strength is collected within time window ② to obtain signal strength value ②.

It should be noted that within each time window, only one collection may be performed based on preset collection duration (for example, one collection may last for preset duration), and a result of the collection is used as a signal strength value corresponding to the current time window; or a plurality of collections may be performed within the time window, and an average of results of the plurality of collections is used as the signal strength value corresponding to the current time window. For example, three collections are performed within a time window, and results of the collections are -36 dBm, -40 dBm, and -38 dBm; in this case, a signal strength value corresponding to the time window is: (-36 dBm + -40 dBm + -38 dBm)/3 = -38 dBm.

In this embodiment of this application, the discovery window is reused for registration to collect optical strength, without additionally allocating a time window for collecting optical strength, reducing impact of abnormality detection of an optical access device on bandwidth utilization.

Step 203: When M signal strength values in the K signal strength values are all greater than a preset strength value and adjacent time windows exist in time windows corresponding to the M signal strength values respectively, the OLT determines that an abnormal optical access device exists in the PON, where M is less than or equal to K and greater than or equal to 2.

For example, under normal circumstances, the preset strength value is -40 dBm. Alternatively, the preset strength value may be set to other values based on actual service needs. This is not limited in this application.

For example, a value of K may be any one of 2 to 5; the first indication information may first indicate the K time windows, and optical signal strength is collected within the K time windows. Further, indicating one or more time windows again may be triggered based on results of K collections, and whether the abnormal optical access device exists may be determined based on results of a plurality of collections, to ensure reliability of the results of the collections and improve accuracy of a detection result.

In an embodiment, K is equal to 2, that is, the indicated time windows are time window ① and time window ②. Time window ① and time window ② are adjacent. A signal strength value corresponding to time window ① is signal strength value ①, and a signal strength value corresponding to time window ② is signal strength value ②. When signal strength value ① and signal strength value (2) are both greater than the preset strength value, it is determined that the abnormal optical access device exists in the PON.

In an embodiment, K is equal to 3, that is, the indicated time windows are time window ①, time window ②, and time window ③. Time windows ① to ③ are adjacent windows. A signal strength value corresponding to time window Ol is signal strength value ①, a signal strength value corresponding to time window ② is signal strength value ②, and a signal strength value corresponding to time window ③ is signal strength value ③. When signal strength value ① and signal strength value ② are both greater than the preset strength value, or signal strength value ② and signal strength value ③ are both greater than the preset strength value, it is determined that the abnormal optical access device exists in the PON.

In an embodiment, K is equal to 4, that is, the indicated time windows are time window ①, time window ②, time window ③, and time window ④. Time windows ① to ④ are adjacent windows. A signal strength value corresponding to time window ① is signal strength value ①, a signal strength value corresponding to time window ② is signal strength value ②, a signal strength value corresponding to time window ③ is signal strength value ③, and a signal strength value corresponding to time window ④ is signal strength value ④. When signal strength value ① and signal strength value ② are both greater than the preset strength value, or signal strength value ② and signal strength value ③ are both greater than the preset strength value, or signal strength value ③ and signal strength value ④ are greater than the preset strength value, it is determined that the abnormal optical access device exists in the PON.

In an embodiment, K is equal to 5, that is, the indicated time windows are time window ①, time window ②, time window ③, time window ④, and time window ⑤. Time windows ① to ⑤ are adjacent windows. A signal strength value corresponding to time window ① is signal strength value ①, a signal strength value corresponding to time window ② is signal strength value ②, a signal strength value corresponding to time window ③ is signal strength value ③, a signal strength value corresponding to time window ④ is signal strength value ④, and a signal strength value corresponding to time window ⑤ is signal strength value ⑤. When signal strength value ① and signal strength value ② are both greater than the preset strength value, or signal strength value ② and signal strength value ③ are both greater than the preset strength value, or signal strength value ③ and signal strength value ④ are greater than the preset strength value, or signal strength value ④ and signal strength value ⑤ are greater than the preset strength value, it is determined that the abnormal optical access device exists in the PON.

In an embodiment, signal strength value ① corresponding to time window ① is -30 dBm, and signal strength value ② corresponding to time window ② is -32 dBm. Time window ① and time window ② are adjacent. Because the two signal strength values are both greater than the preset strength value -40 dBm, it may be determined that the abnormal optical access device exists in the PON.

In an embodiment, signal strength value ① corresponding to time window ① is -42 dBm, signal strength value ② corresponding to time window ② is -32 dBm, and signal strength value ③ corresponding to time window ③ is -41 dBm. Time window ① and time window ② are adjacent, and time window ② and time window ③ are adjacent. Because signal strength value ① is less than the preset strength value, signal strength value ② is greater than the preset strength value, and signal strength value ③ is less than the preset strength value, a condition for determining that the abnormal optical access device exists is not satisfied; in this case, optical signal strength may continue to be collected within a next discovery window to obtain signal strength value ④, or a collection may continue to be performed in two subsequent discovery windows to obtain optical signal strength values ④ and ⑤, and whether the abnormal optical access device exists is determined based on a result of the subsequent collection.

Further, for example, when the K signal strength values satisfy a first condition, it is determined that the abnormal optical access device does not exist in the PON. The first condition indicates that the following situation does not exist: Any two adjacent signal strength values in the K signal strength values are both greater than a preset strength value. Any two adjacent signal strength values are signal strength values corresponding to any two adjacent time windows in the K time windows.

In an embodiment, signal strength value ① corresponding to time window ① is -42 dBm, and signal strength value ② corresponding to time window ② is -32 dBm. Time window ① and time window ② are adjacent. Because signal strength value ① is less than the preset strength value and signal strength value ② is greater than the preset strength value, that is, the signal strength values corresponding to adjacent time windows are not both greater than the preset strength value, namely, signal strength values ① and ② satisfy the first condition, it may be determined that the abnormal optical access device does not exist in the PON; or a subsequent discovery window may be further indicated to collect optical signal strength, and whether the abnormal optical access device exists is determined based on a result of the subsequent collection.

In an embodiment, signal strength value ① corresponding to time window ① is -42 dBm, and signal strength value ② corresponding to time window ② is -45 dBm. Time window ① and time window ② are adjacent. Because the signal strength values corresponding to the adjacent time windows, that is, signal strength values ① and ②, are both less than the preset strength value, it may be determined that the abnormal optical access device does not exist in the PON, and detection is stopped; or in consideration of improving reliability of a detection result, optical signal strength may be collected within a next discovery window, and whether the abnormal optical access device exists in the PON is determined based on a result of the subsequent collection.

For example, second information is broadcast after it is determined that the abnormal optical access device exists in the PON. The second information indicates the optical access device to resume the registration process within a discovery window. This avoids long-term impact on a registration function of an optical access device due to abnormality detection of an optical access device. Similarly, third information is broadcast after it is determined that the abnormal optical access device does not exist in the PON, indicating the optical access device to resume the registration process within a discovery window.

After it is determined that the abnormal optical access device exists in the PON, that the abnormal optical access device exists in the PON is indicated to a user. A form of the indication may be a pop-up page, an alert prompt tone, or the like. This application does not impose limitation on the form of the indication. Technical persons or relevant staff may perform troubleshooting on the abnormal optical access device based on the indication, improving security of the PON.

According to the method for abnormality detection of an optical access device according to this embodiment of this application, when it is determined that the offline situation of the optical access device satisfies the preset detection condition, abnormality detection of an optical access device can be automatically triggered without manual participation, achieving a high degree of automation. In addition, in the detection process, whether the abnormal optical access device exists in the PON is comprehensively determined based on the results of the plurality of optical strength collections, improving accuracy and reliability of a detection result.

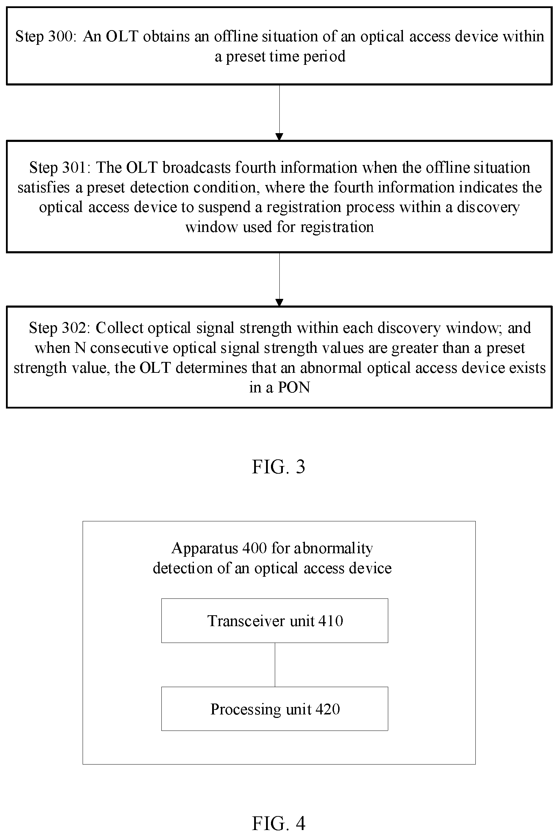

An embodiment of this application further provides a method for abnormality detection of an optical access device, as shown in FIG. 3.

Step 300: An OLT obtains an offline situation of an optical access device within a preset time period.

For example, for the obtaining the offline situation of the optical access device within the preset time period, refer to the above step 200. Details are not described herein again.

Step 301: The OLT broadcasts fourth information when the offline situation satisfies a preset detection condition, where the fourth information indicates the optical access device to suspend a registration process within a discovery window used for registration.

For example, the preset detection condition is the same as the preset detection condition in the above step 201. Different from step 201, in this method, the fourth information only indicates the optical access device to suspend the registration process within the discovery windows used for registration, but does not indicate a quantity of time windows for suspending registration.

Step 302: Collect optical signal strength within each discovery window; and when N consecutive optical signal strength values are greater than a preset strength value, the OLT determines that an abnormal optical access device exists in a PON.

For example, optical signal strength is collected within a first discovery window to obtain a first signal strength value. The first discovery window is the 1^{st} discovery window after a broadcast moment of the fourth information. When the first signal strength value is greater than the preset strength value, optical signal strength is collected within a second discovery window to obtain a second signal strength value. The second discovery window is a next discovery window of the first discovery window. When the second signal strength value is also greater than the preset strength value, the OLT determines that the abnormal optical access device exists in the PON. After determining that the abnormal optical access device exists in the PON, the OLT broadcasts eighth information, indicating the optical access device to resume the registration process within a discovery window. When the second signal strength value is less than or equal to the preset strength value, sixth information is broadcast. The sixth information indicates the optical access device to resume the registration process within a discovery window.

For example, the first signal strength value collected within the first discovery window is -30 dBm, and the preset strength value is still -40 dBm. Because the first signal strength value is greater than the preset strength value, the second signal strength value is collected within the next discovery window of the first discovery window, that is, within a second time window. When the second signal strength value is -32 dBm, which is still greater than the preset strength value, the OLT may determine that the abnormal optical access device exists in the PON, eighth information is broadcast, indicating the optical access device to resume the registration process within a discovery window. When the second signal strength value is -42 dBm, sixth information is broadcast, indicating the optical access device to resume the registration process within a discovery window.

For example, when the first signal strength value is less than or equal to the preset strength value, the OLT broadcasts fifth information, indicating the optical access device to resume the registration process within a discovery window. Alternatively, the second signal strength value may be collected within the second discovery window. When the first signal strength value and the second signal strength value are both less than or equal to the preset strength value, it may be determined that the abnormal optical access device does not exist in the PON, and fifth information may be broadcast, indicating the optical access device to resume the registration process within a discovery window.

For example, when the first signal strength value is -41 dBm, fifth information may be broadcast, indicating the optical access device to resume the registration process within a discovery window. Alternatively, the second signal strength value may be collected within the second discovery window. When the second signal strength value is -41 dBm, because the first signal strength value and the second signal strength value are both less than the preset strength value, fifth information is broadcast, indicating the optical access device to resume the registration process within a discovery window.

For example, when the first signal strength value is less than or equal to the preset strength value and the second signal strength value is greater than the preset strength value, optical signal strength may continue to be collected in a next discovery window of the second discovery window, and whether the abnormal optical access device exists is determined based on a result of the subsequent collection. When L consecutive optical signal strength values are less than or equal to the preset strength value, seventh information is broadcast. The seventh information indicates the optical access device to resume the registration process within the discovery window, and L is a positive integer and L is greater than or equal to 2.

For example, when the first signal strength value is -41 dBm and the second signal strength value is -31 dBm, optical signal strength may continue to be collected in a next discovery window of the second discovery window (a third discovery window) to obtain a third signal strength value. When the third signal strength value is -41 dBm, a collection may continue to be performed in a fourth discovery window to obtain a fourth signal strength value, until seventh information is broadcast when two or more consecutive optical signal strength values are less than or equal to the preset strength value. The seventh information indicates the optical access device to resume the registration process within a discovery window used for registration.

Compared with the method for abnormality detection of an optical access device shown in FIG. 2, the method shown in FIG. 3 does not need to indicate how many time windows for suspending the registration process of the optical access device, a quantity of required windows is determined based on an actual detection situation, achieving a more concise and rapid detection process. The method in FIG. 2 or the method in FIG. 3 may be selected based on an actual service need for detection.

In addition to the above automatic triggering of abnormality detection of an optical access device, an embodiment of this application further provides a manual triggering method for abnormality detection of an optical access device. When technical persons or relevant staff discover network disconnection or other network anomalies, the technical persons may manually trigger abnormality detection of an optical access device through an operation interface of a computing device running an OLT, for example, clicking a detection button on the interface. After the click on the button, first information or fourth information is broadcast. When first information is broadcast, a subsequent process is the same as the above steps 201 to 203. When fourth information is broadcast, subsequent steps are the same as the above steps 301 to 303. Details are not described herein again.

FIG. 4 is a schematic diagram of a structure of a possible apparatus for abnormality detection of an optical access device according to an embodiment of this application. The apparatus for abnormality detection of an optical access device may be used to implement functions of the OLT in the above method embodiments, and thus may also achieve beneficial effects of the above method embodiments.

As shown in FIG. 4, the apparatus 400 for abnormality detection of an optical access device includes a transceiver unit 410 and a processing unit 420. The apparatus 400 for abnormality detection of an optical access device is used to implement functions of the OLT or a functional module in the OLT in the method embodiment shown in FIG. 2 above.

When the apparatus 400 for abnormality detection of an optical access device is used to implement functions of the OLT in the method embodiment shown in FIG. 2,
the transceiver unit 410 is configured to obtain an offline situation of an optical access device within a preset time period;
the transceiver unit 410 is further configured to broadcast first information when the offline situation satisfies a preset detection condition, where the first information indicates the optical access device to suspend a registration process within K time windows; K is greater than or equal to 2; and the K time windows one-to-one correspond to K adjacent discovery windows used for registration; and
the processing unit 420 is configured to: collect optical signal strength within the K time windows respectively to obtain K signal strength values, where the K time windows one-to-one correspond to the K signal strength values; and when M signal strength values in the K signal strength values are all greater than a preset strength value and adjacent time windows exist in time windows corresponding to the M signal strength values respectively, determine that an abnormal optical access device exists in a PON, where M is less than or equal to K and greater than or equal to 2.

In a possible design, when the transceiver unit 410 is configured to: when obtaining the offline situation of the optical access device within the preset time period, obtain states of a plurality of optical access devices at a first moment and states of the plurality of optical access devices at a second moment, where the first moment is earlier than the second moment, the states of the plurality of optical access devices at the first moment and the states of the plurality of optical access devices at the second moment are adjacent states, and the preset time period is determined based on the first moment and the second moment; and determine, based on the states of the plurality of optical access devices at the first moment and the states of the plurality of optical access devices at the second moment, that N optical access devices in the plurality of optical access devices are in an in-service state at the first moment and in an out-of-service state at the second moment, where N is a positive integer.

In a possible design, the offline situation satisfying the preset detection condition includes a value of N being greater than a preset value.

In a possible design, the preset value is greater than or equal to 2.

In a possible design, a start position of an i^{th} time window is later than or equal to a start position of an i^{th} discovery window, and an end position of the i^{th} time window is earlier than or equal to an end position of the i^{th} discovery window. The i^{th} time window is any one of the K time windows, and i is a positive integer. The i^{th} discovery window is a discovery window corresponding to the i^{th} time window.

In a possible design, the first information includes indication information and a first identifier, the indication information indicates the K time windows, and the first identifier indicates the optical access device to suspend the registration process within the discovery window.

In a possible design, the transceiver unit 410 is configured to broadcast second information after determining that the abnormal optical access device exists in the PON, where the second information indicates the optical access device to resume the registration process within the discovery window.

In a possible design, the processing unit 420 is configured to: after determining that the abnormal optical access device exists in the PON, indicate to a user that the abnormal optical access device exists in the PON.

In a possible design, when the K signal strength values satisfy a first condition, it is determined that the abnormal optical access device does not exist in the PON. The first condition indicates that the following situation does not exist: Any two adjacent signal strength values in the K signal strength values are both greater than a preset strength value. Any two adjacent signal strength values are signal strength values corresponding to any two adjacent time windows in the K time windows.

In a possible design, the transceiver unit 410 is configured to broadcast third information after determining that the abnormal optical access device does not exist in the PON, where the third information indicates the optical access device to resume the registration process within the discovery window.

For more detailed descriptions of the above transceiver unit 410 and processing unit 420, reference may be directly made to the relevant descriptions in the method embodiment shown in FIG. 2, and details are not described herein again.

When the apparatus 400 for abnormality detection of an optical access device is used to implement the functions of the OLT in the method embodiment shown in FIG. 3,
the transceiver unit 410 is configured to obtain an offline situation of an optical access device within a preset time period;
the transceiver unit 410 is further configured to broadcast fourth information when the offline situation satisfies a preset detection condition, where the fourth information indicates the optical access device to suspend a registration process within a discovery window used for registration; and
the processing unit 420 is configured to: collect optical signal strength within each discovery window; and when N consecutive optical signal strength values are greater than a preset strength value, determine that an abnormal optical access device exists in the PON, where N is a positive integer and N is greater than or equal to 2.

In a possible design, the processing unit 420 is configured to: collect optical signal strength within each discovery window; and when determining, in the case of the N consecutive optical signal strength values being greater than the preset strength value, that the abnormal optical access device exists in the PON, collect optical signal strength within a first discovery window to obtain a first signal strength value, where the first discovery window is the discovery window that is the first one after a broadcast moment of the fourth information; collect optical signal strength within a second discovery window when the first signal strength value is greater than the preset strength value, to obtain a second signal strength value, where the second discovery window is a next discovery window of the first discovery window; and when the second signal strength value is greater than the preset strength value, determine that the abnormal optical access device exists in the PON.

In a possible design, after the obtaining the first signal strength value, the transceiver unit 410 is further configured to: broadcast fifth information when the first signal strength value is less than or equal to the preset strength value, where the fifth information indicates the optical access device to resume the registration process within the discovery window; or collect optical signal strength within the second discovery window when the first signal strength value is less than or equal to the preset strength value, to obtain a second signal strength value, where the second discovery window is a next discovery window of the first discovery window; and broadcast the fifth information when the first signal strength value and the second signal strength value are both less than or equal to the preset strength value.

In a possible design, after the obtaining the second signal strength value, the transceiver unit 410 is further configured to broadcast sixth information when the second signal strength value is less than or equal to the preset strength value, where the sixth information indicates the optical access device to resume the registration process within the discovery window.

In a possible design, the transceiver unit 410 is further configured to broadcast seventh information when L consecutive optical signal strength values are less than or equal to the preset strength value, where the seventh information indicates the optical access device to resume the registration process within the discovery window, and L is a positive integer and L is greater than or equal to 2.

In a possible design, after the determining that the abnormal optical access device exists in the PON, the transceiver unit 410 is further configured to broadcast eighth information, where the eighth information indicates the optical access device to resume the registration process within the discovery window.

For more detailed descriptions of the above transceiver unit 410 and processing unit 420, reference may be directly made to the relevant descriptions in the method embodiment shown in FIG. 3, and details are not described herein again.

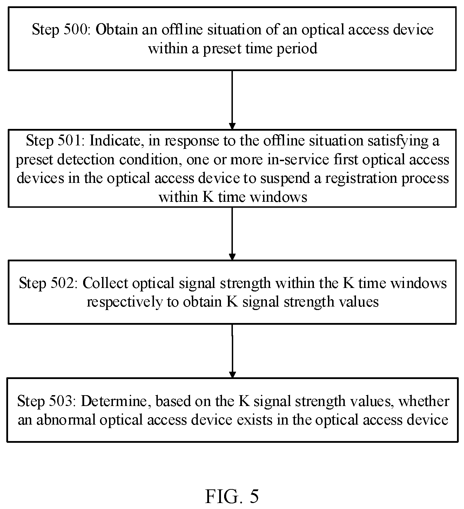

As shown in FIG. 5, a method for abnormality detection of an optical access device is provided, including the following steps.

Step 500: Obtain an offline situation of the optical access device within a preset time period.

Step 501: Indicate, in response to the offline situation satisfying a preset detection condition, one or more in-service first optical access devices in the optical access device to suspend a registration process within K time windows, where K is a positive integer greater than or equal to 2, the K time windows one-to-one correspond to K discovery windows, and the K discovery windows are adjacent and used for performing the registration process.

Step 502: Collect optical signal strength within the K time windows respectively to obtain K signal strength values, where the K time windows one-to-one correspond to the K signal strength values.

Step 503: Determine, based on the K signal strength values, whether an abnormal optical access device exists in the optical access device.

Based on the abnormality detection method in this embodiment, other embodiments may also be obtained by combining additional or alternative steps or features of the foregoing embodiments, and details are not described in this application.

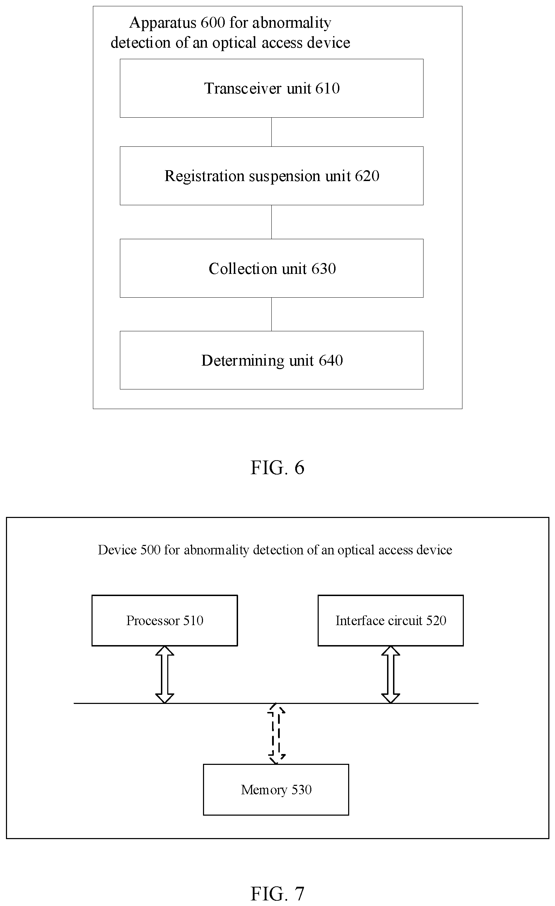

As shown in FIG. 6, an apparatus for abnormality detection of an optical access device is provided. The apparatus includes the following units:
a transceiver unit 610, configured to obtain an offline situation of the optical access device within a preset time period;
a registration suspension unit 620, further configured to indicate, in response to the offline situation satisfying a preset detection condition, an in-service first optical access device in the optical access device to suspend a registration process within K time windows, where K is a positive integer greater than or equal to 2, the K time windows one-to-one correspond to K discovery windows, and the K discovery windows are adjacent and used for performing the registration process;
a collection unit 630, configured to collect optical signal strength within the K time windows respectively to obtain K signal strength values, where the K time windows one-to-one correspond to the K signal strength values; and
a determining unit 640, configured to determine, based on the K signal strength values, whether an abnormal optical access device exists in the optical access device.

Based on the abnormality detection apparatus in this embodiment, other embodiments may also be obtained by combining additional or alternative steps or features of the foregoing embodiments, and details are not described in this application.

As shown in FIG. 7, a device 500 for abnormality detection of an optical access device includes a processor 510 and an interface circuit 520. The processor 510 and the interface circuit 520 are coupled to each other. It may be understood that the interface circuit 520 may be a transceiver or an input/output interface. Optionally, the device 500 for abnormality detection of an optical access device may further include a memory 530, configured to store instructions executed by the processor 510 or store input data required for the processor 510 to run instructions or store data generated after the processor 510 runs instructions.

When the device 500 for abnormality detection of an optical access device is used to implement the method shown in FIG. 2 or FIG. 3, the processor 510 is used to implement the functions of the above processing unit 420, and the interface circuit 520 is used to implement the functions of the above transceiver unit 410.

An embodiment of this application further provides a computer-readable storage medium, where computer executable instructions are stored in the computer-readable storage medium, and the computer executable instructions, when executed by a processor, are used to implement the method shown in FIG. 2 or FIG. 3.

An embodiment of this application further provides a computer program product, where the computer program product includes a computer program, and when the computer program is executed by a processor, the method shown in FIG. 2 or FIG. 3 is implemented.

Division into units in embodiments of this application is an example and is merely a kind of logical function division, and there may be other division manners in actual implementation. In addition, the functional units in embodiments of this application may be integrated into one processor, or may exist physically separately, or two or more units may be integrated into one unit. The above integrated units may be implemented in the form of hardware or in the form of software functional units.

Although preferred embodiments of this application have been described, once persons skilled in the art learn of the basic creative idea, they may make other changes and modifications to these embodiments. Therefore, the appended claims are intended to be interpreted as including the preferred embodiments and all changes and modifications falling within the scope of this application.

It is clear that persons skilled in the art may make various changes and modifications to this application without departing from the scope of this application. If these modifications and variations of this application fall within the scope of the claims of this application and their equivalent technologies, this application is also intended to include these changes and modifications.

## Claims

1. A method for abnormality detection of an optical access device, comprising:
obtaining an offline situation of the optical access device within a preset time period;
indicating, in response to the offline situation satisfying a preset detection condition, one or more in-service first optical access devices in the optical access device to suspend a registration process within K time windows, wherein K is a positive integer greater than or equal to 2, the K time windows one-to-one correspond to K discovery windows, and the K discovery windows are adjacent and used for performing the registration process;
collecting optical signal strength within the K time windows respectively to obtain K signal strength values, wherein the K time windows one-to-one correspond to the K signal strength values; and
determining, based on the K signal strength values, whether an abnormal optical access device exists in the optical access device.

2. The method according to claim 1, wherein the determining, based on the K signal strength values, whether the abnormal optical access device exists in the optical access device comprises:
when at least two signal strength values in the K signal strength values are all greater than a preset strength value and time windows corresponding to the at least two signal strength values respectively comprise at least two adjacent time windows, determining that the abnormal optical access device exists in the optical access device.

3. The method according to claim 1 or 2, wherein the obtaining the offline situation of the optical access device within the preset time period comprises:
obtaining a first state of the optical access device at a first moment and a second state of the optical access device at a second moment, wherein the first moment is earlier than the second moment, and the first state of the optical access device and the second state of the optical access device are adjacent states;
determining the preset time period based on the first moment and the second moment; and
determining the offline situation of the optical access device within the preset time period based on the first state of the optical access device and the second state of the optical access device.

4. The method according to claim 3, wherein the determining the offline situation of the optical access device within the preset time period based on the first state of the optical access device and the second state of the optical access device comprises:
determining, based on the first state of the optical access device and the second state of the optical access device, a quantity of one or more second optical access devices in the optical access device, wherein a first state or first states of the one or more second optical access devices is an in-service state, and a second state or second states of the one or more second optical access devices is an out-of-service state.

5. The method according to claim 4, wherein the offline situation satisfying the preset detection condition comprises the quantity of the one or more second optical access devices being greater than a preset value.

6. The method according to any one of claims 1 to 5, wherein each of the K time windows is comprised in a corresponding discovery window.

7. The method according to claim 6, wherein a start position of a first time window in the K time windows is later than or equal to a start position of a first discovery window in the K discovery windows, an end position of the first time window is earlier than or equal to an end position of the first discovery window, and the first discovery window is a discovery window corresponding to the first time window.

8. The method according to any one of claims 1 to 7, wherein the first information comprises indication information and a first identifier, the indication information indicates the K time windows, and the first identifier indicates the one or more first optical access devices to suspend the registration process within the time windows.

9. The method according to any one of claims 1 to 8, wherein the collecting the optical signal strength within the K time windows respectively comprises:
collecting a first signal strength value within a second time window in the K time windows; and
when the first signal strength value is greater than a preset strength value, collecting a second signal strength value within a third time window in the K time windows, wherein the third time window is a next time window of the second time window; and
the determining, based on the K signal strength values, that the abnormal optical access device exists in the optical access device comprises:
when the first signal strength value and the second signal strength value are both greater than the preset strength value, determining that the abnormal optical access device exists in the optical access device.

10. The method according to any one of claims 1 to 9, wherein the collecting the optical signal strength within the K time windows respectively to obtain the K signal strength values comprises:
performing a plurality of collections for signal strength values within a fourth time window in the K time windows, and obtaining a third signal strength value for the fourth time window based on the signal strength values obtained through the plurality of collections.

11. The method according to any one of claims 1 to 10, wherein the indicating, in response to the offline situation satisfying the preset detection condition, the one or more in-service first optical access devices in the optical access device to suspend the registration process within the K time windows comprises:
broadcasting a first message in response to the offline situation satisfying the preset detection condition, wherein the first message indicates the one or more in-service first optical access devices in the optical access device to suspend the registration process within the K time windows; and/or
after it is determined that the abnormal optical access device exists in the optical access device, the method further comprises:
broadcasting second information, wherein the second information indicates the one or more first optical access devices to resume the registration process within the time windows.

12. The method according to any one of claims 1 to 11, wherein the determining, based on the K signal strength values, whether the abnormal optical access device exists in the optical access device comprises:
in response to the K signal strength values satisfying a first condition, determining that the abnormal optical access device does not exist in the optical access device, wherein the first condition indicates that the following situation does not exist: two adjacent signal strength values in the K signal strength values are both greater than a preset strength value; and the two adjacent signal strength values are signal strength values corresponding to two adjacent time windows in the K time windows.

13. The method according to claim 12, wherein after the determining, based on the K signal strength values, whether the abnormal optical access device exists in the optical access device, the method further comprises:
broadcasting third information after determining that the abnormal optical access device does not exist in the optical access device, wherein the third information indicates the one or more first optical access devices to resume the registration process within the time windows.

14. A method for abnormality detection of an optical access device, comprising:
obtaining an offline situation of the optical access device within a preset time period;
broadcasting fourth information in response to the offline situation satisfying a preset detection condition, wherein the fourth information indicates one or more in-service first optical access devices in the optical access device to suspend a registration process within a plurality of discovery windows used for registration;
collecting optical signal strength within the plurality of discovery windows respectively to obtain a plurality of signal strength values;
determining, based on the plurality of signal strength values, whether an abnormal optical access device exists in the optical access device; and
when N consecutive signal strength values in the plurality of signal strength values are all greater than a preset strength value, determining that the abnormal optical access device exists in the optical access device, wherein N is a positive integer greater than or equal to 2.

15. The method according to claim 14, wherein the collecting the optical signal strength within the plurality of discovery windows respectively to obtain the plurality of signal strength values comprises:
collecting optical signal strength within a first discovery window in the plurality of discovery windows to obtain a first signal strength value;
collecting optical signal strength within a second discovery window in the plurality of discovery windows when the first signal strength value is greater than the preset strength value, to obtain a second signal strength value, wherein the second discovery window is a next discovery window of the first discovery window; and
when the second signal strength value is greater than the preset strength value, determining that the abnormal optical access device exists in the optical access device.

16. The method according to claim 15, wherein after the obtaining the first signal strength value, the method further comprises:
broadcasting fifth information when the first signal strength value is less than or equal to the preset strength value, wherein the fifth information indicates the one or more first optical access devices to resume the registration process within a discovery window used for registration; or
broadcasting fifth information when the first signal strength value and the second signal strength value are both less than or equal to the preset strength value, wherein the fifth information indicates the one or more first optical access devices to resume the registration process within a discovery window used for registration.

17. An apparatus for abnormality detection of an optical access device, comprising:
a transceiver unit, configured to obtain an offline situation of the optical access device within a preset time period;
a registration suspension unit, further configured to indicate, in response to the offline situation satisfying a preset detection condition, an in-service first optical access device in the optical access device to suspend a registration process within K time windows, wherein K is a positive integer greater than or equal to 2, the K time windows one-to-one correspond to K discovery windows, and the K discovery windows are adjacent and used for performing the registration process;
a collection unit, configured to collect optical signal strength within the K time windows respectively to obtain K signal strength values, wherein the K time windows one-to-one correspond to the K signal strength values; and
a determining unit, configured to determine, based on the K signal strength values, whether an abnormal optical access device exists in the optical access device.

18. An apparatus for abnormality detection of an optical access device, comprising:
a transceiver unit, configured to obtain an offline situation of the optical access device within a preset time period;
a registration suspension unit, configured to broadcast fourth information in response to the offline situation satisfying a preset detection condition, wherein the fourth information indicates one or more in-service first optical access devices in the optical access device to suspend a registration process within a plurality of discovery windows used for registration;
a collection unit, configured to collect optical signal strength within the plurality of discovery windows respectively to obtain a plurality of signal strength values; and
a determining unit, configured to: determine, based on the plurality of signal strength values, whether an abnormal optical access device exists in the optical access device; and when N consecutive signal strength values in the plurality of signal strength values are all greater than a preset strength value, determine that the abnormal optical access device exists in the optical access device, wherein N is a positive integer greater than or equal to 2.

19. A device for abnormality detection of an optical access device, comprising one or more processors and one or more memories, wherein the one or more memories store one or more programs, and when the programs are executed by the one or more processors, the apparatus is caused to perform the method according to any one of claims 1 to 13.

20. A computer-readable storage medium, wherein computer executable instructions are stored in the computer-readable storage medium, and the computer executable instructions, when executed by a processor, are used to implement the method according to any one of claims 1 to 13.
